# EUROPEAN PATENT APPLICATION

(11) **EP 3 487 223 A1**
(43) Date of publication of application: **22.05.2019**
(21) Application number: 18198710.8
(22) Date of filing: 03.04.2013
(51) Int. Cl.: H04W 36/18, H04W 36/00

(54) **DATA TRANSMISSION METHOD, COMMUNICATIONS DEVICE, AND COMMUNICATIONS SYSTEM**

(62) Divisional of application: 13881166.6
(71) Applicant: HUAWEI TECHNOLOGIES CO., LTD., Guangdong 518129 (CN)
(72) Inventor: LIN, Bo, Shenzhen, Guangdong 518129, P.R. (CN); CHAI, Li, Shenzhen, Guangdong 518129, P.R. (CN)
(74) Representative: Gill Jennings & Every LLP

(57) **Abstract**

Embodiments of the present invention provide a data transmission method, a communications device, and a communications system. In the method, a communication node to which a target cell belongs acquires first information, where the first information includes configuration information of a first user plane connection that is established by UE and a communication node to which a source cell belongs, and the configuration information includes at least one of a PDCP layer configuration of the first user plane connection, an RLC layer configuration of the first user plane connection, or a MAC layer configuration of the first user plane connection. Therefore, a physical layer, a PDCP layer, an RLC layer, and a MAC layer do not need to be re-established in a process in which the UE moves from the source cell to the target cell, thereby reducing interrupt latency of data transmission of the UE and improving user experience of the UE.

## Description

### TECHNICAL FIELD

Embodiments of the present invention relate to the radio communications field, and specifically, to a data transmission technology.

### BACKGROUND

To meet an increasingly high requirement of user equipment (User Equipment, UE for short) for communication bandwidth, one or more small communication nodes (for example, micro base stations) are generally deployed in a signal coverage hole area or an area with extremely heavy communication service load in a cell of a communication node (for example, a macro base station), so as to implement remediation of a signal coverage hole or offloading of a data volume, thereby achieving an objective of improving a communications system capacity, improving a user throughput, or improving signal coverage.

However, in a process in which the UE is handed over from one cell to another cell, a physical layer, a Medium Access Control (Medium Access Control, MAC for short) layer, a Radio Link Control (Radio Link Control) layer, and a Packet Data Convergence Protocol (Packet Data Convergence Protocol, PDCP) layer of the UE are to be re-established, thereby causing interruption of user experience of the UE.

### SUMMARY

In view of the foregoing problem, embodiments of the present invention provide a data transmission method, a communications device, and a communications system.

A first aspect of the embodiments of the present invention provides a data transmission method, where the method includes:
determining, by a communication control node, whether a communication node to which a target cell belongs needs to send data to user equipment or receive data from the user equipment; and
when the communication control node determines that the communication node to which the target cell belongs needs to send the data to the user equipment or receive the data from the user equipment, indicating, by the communication control node, first information to the communication node to which the target cell belongs, where the first information is used to instruct the communication node to which the target cell belongs to send the data to the user equipment or receive the data from the user equipment by using a radio resource configuration of a first connection; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Based on the first aspect, in a first possible implementation manner, the determining, by a communication control node, whether a communication node to which a target cell belongs needs to send data to user equipment or receive data from the user equipment includes:
instructing, by the communication control node, the communication node to which the target cell belongs to perform measurement on an uplink reference signal of the user equipment;
receiving, by the communication control node, a measurement report obtained by performing measurement on the uplink reference signal of the user equipment by the communication node to which the target cell belongs, where the measurement report includes reference signal received power or reference signal received quality of the uplink reference signal of the user equipment; and
determining, by the communication control node according to the measurement report, whether the communication node to which the target cell belongs needs to send the data to the user equipment or receive the data from the user equipment.

Based on the first aspect or the first possible implementation manner, in a second possible implementation manner, the method further includes:
instructing, by the communication control node, the communication node to which the source cell belongs to keep the first connection, and send the data to the user equipment or receive the data from the user equipment by using the first connection.

Based on the second possible implementation manner, in a third possible implementation manner, the determining, by a communication control node, whether a communication node to which a target cell belongs needs to send data to user equipment or receive data from the user equipment includes:
in a case in which the communication control node learns that the user equipment has a multi-connection capability, determining, by the communication control node, whether the communication node to which the target cell belongs needs to send data to the user equipment or receive data from the user equipment; where:
the multi-connection capability is used to indicate that the user equipment has a capability of being scheduled by at least two communication nodes; or the multi-connection capability is used to indicate that the user equipment has a capability of establishing a control plane connection or a user plane connection with each of the at least two communication nodes; or the multi-connection capability is used to indicate that the user equipment has a capability of establishing peer-to-peer Medium Access Control MAC protocol entities with the at least two communication nodes; or the multi-connection capability is used to indicate that a MAC protocol entity of each of the at least two communication nodes has a capability of processing data of the user equipment.

Based on any one of the first aspect to the third possible manner, in a fourth possible implementation manner, the radio resource configuration includes at least one of the following: a configuration of a Radio Resource Control (Radio Resource Control, RRC) layer, a configuration of a Packet Data Convergence Protocol PDCP layer, a configuration of a Radio Link Control RLC layer, a configuration of a Medium Access Control MAC layer, or a configuration of a physical layer; or the radio resource configuration includes at least one of the following: a configuration of an enhanced physical downlink control channel (Enhanced Physical Downlink Control Channel, E-PDCCH), a configuration of a demodulation reference signal (DeModulation Reference Signal, DMRS), a configuration of a channel state indicator-reference signal (Channel State Indicator-Reference Signal, CSI-RS), a configuration of a scheduling request (Scheduling Request, SR), and a configuration of a channel quality indicator (Channel quality indicator, CQI) report.

Based on any one of the first aspect to the fourth possible implementation manner, in a fifth possible implementation manner, the method further includes:
indicating, by the communication control node, a sequence initialization parameter of the target cell to the communication node to which the target cell belongs, where the sequence initialization parameter of the target cell is used by the communication node to which the target cell belongs to receive the data from the user equipment or send the data to the user equipment; or
indicating, by the communication control node to the communication node to which the target cell belongs, a cell identity that is used when the communication node to which the target cell belongs communicates with the user equipment, where the cell identity is used by the communication node to which the target cell belongs to receive data from the user equipment or send data to the user equipment according to the cell identity.

Based on the first aspect to the fifth possible implementation manner, in a sixth possible implementation manner, the method further includes:
indicating, by the communication control node, the sequence initialization parameter of the target cell to the user equipment, where the sequence initialization parameter of the target cell is used by the user equipment to receive the data from the communication node to which the target cell belongs or send the data to the communication node to which the target cell belongs; or
instructing, by the communication control node, the user equipment to keep a PDCP entity, an RLC entity, or a MAC entity of the first connection, where the PDCP entity, the RLC entity, or the MAC entity of the first connection is used by the user equipment to receive the data from the communication node to which the target cell belongs or send the data to the communication node to which the target cell belongs; or
indicating, by the communication control node, a cell identity of the target cell to the user equipment, where the cell identity of the target cell is used by the user equipment to receive the data from the communication node to which the target cell belongs or send the data to the communication node to which the target cell belongs.

Based on the fifth possible implementation manner or the sixth possible implementation manner, in a seventh possible implementation manner, the sequence initialization parameter includes at least one of the following: a sequence initialization parameter of a demodulation reference signal DMRS, a sequence initialization parameter of a channel state indicator-reference signal CSI-RS, a sequence initialization parameter of a sounding reference signal SRS, a sequence initialization parameter of an enhanced physical downlink control channel E-PDCCH, a sequence initialization parameter of a physical uplink shared channel (Physical Uplink Shared Channel, PUSCH), a sequence initialization parameter of a physical downlink shared channel (Physical Downlink Shared Channel, PDSCH), and a sequence initialization parameter of a physical uplink control channel PUCCH.

Based on the first aspect to the seventh possible implementation manner, in an eighth possible implementation manner, the method further includes:
indicating, by the communication control node to the communication node to which the target cell belongs, a time for sending the data to the user equipment by the communication node to which the target cell belongs, or a modulation and coding scheme that is used for sending the data to the user equipment by the communication node to which the target cell belongs, so that the communication node to which the target cell belongs sends the data to the user equipment or receives the data from the user equipment at the time for sending the data or by using the modulation and coding scheme that is used for sending the data.

Based on the first aspect to the eighth possible implementation manner, in a ninth possible implementation manner, the method further includes:
sending, by the communication control node, the data to the communication node to which the source cell belongs, the communication node to which the target cell belongs, or the user equipment.

Based on the first aspect to the ninth possible implementation manner, in a tenth possible implementation manner,
the communication control node and the communication node to which the source cell belongs are a same communication node, and the communication control node and the communication node to which the target cell belongs are different communication nodes; or
the communication control node and the communication node to which the source cell belongs are different communication nodes, the communication control node and the communication node to which the target cell belongs are different communication nodes, and the communication node to which the source cell belongs and the communication node to which the target cell belongs are different communication nodes; or
the communication control node, the communication node to which the source cell belongs, and the communication node to which the target cell belongs are a same communication node; or
the communication control node and the communication node to which the source cell belongs are different communication nodes, and the communication node to which the source cell belongs and the communication node to which the target cell belongs are a same communication node; or
the communication control node and the communication node to which the target cell belongs are a same communication node, and the communication control node and the communication node to which the source cell belongs are different communication nodes.

A second aspect of the embodiments of the present invention provides a data transmission method, where the method includes:
acquiring, by user equipment, a radio resource configuration of a first connection; and
receiving, by the user equipment by using the radio resource configuration of the first connection, the data from a communication node to which a target cell belongs or sending the data to the communication node to which the target cell belongs; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Based on the second aspect, in a first possible implementation manner, information about the radio resource configuration includes at least one of the following: a configuration of a Radio Resource Control RRC layer, a configuration of a Packet Data Convergence Protocol PDCP layer, a configuration of a Radio Link Control RLC layer, a configuration of a Medium Access Control MAC layer, or a configuration of a physical layer.

Based on the second aspect or the first possible implementation manner, in a second possible implementation manner, the method further includes:
in a case in which the user equipment has a multi-connection capability, receiving, by the user equipment by using the first connection, the data from the communication node to which the source cell belongs or sending the data to the communication node to which the source cell belongs; where:
the multi-connection capability is used to indicate that the user equipment has a capability of being scheduled by at least two communication nodes; or the multi-connection capability is used to indicate that the user equipment has a capability of establishing a control plane connection or a user plane connection with each of the at least two communication nodes; or the multi-connection capability is used to indicate that the user equipment has a capability of establishing peer-to-peer Medium Access Control MAC protocol entities with the at least two communication nodes; or the multi-connection capability is used to indicate that a MAC protocol entity of each of the at least two communication nodes has a capability of processing data of the user equipment.

Based on the second aspect to the second possible implementation manner of the second aspect, in a third possible implementation manner, the receiving, by the user equipment by using the radio resource configuration of the first connection, the data from a communication node to which a target cell belongs or sending the data to the communication node to which the target cell belongs includes:
receiving, by the user equipment according to a received sequence initialization parameter of the target cell and the radio resource configuration of the first connection, the data from the communication node to which the target cell belongs or sending the data to the communication node to which the target cell belongs; or
receiving, by the user equipment by using a PDCP entity, an RLC entity, or a MAC entity of the first connection and by using the radio resource configuration of the first connection, the data from the communication node to which the target cell belongs or sending the data to the communication node to which the target cell belongs; or
receiving, by the user equipment according to a received cell identity of the target cell and the radio resource configuration of the first connection, the data from the communication node to which the target cell belongs or sending the data to the communication node to which the target cell belongs.

A third aspect of the embodiments of the present invention provides a data transmission method, where the method includes:
acquiring, by a communication node to which a target cell belongs, first information from a communication control node, where the first information is used to instruct the communication node to which the target cell belongs to send data to user equipment or receive data from the user equipment by using a radio resource configuration of a first connection, and the data includes control plane signaling data of the user equipment or user plane service data of the user equipment; and
sending, by the communication node to which the target cell belongs, the data to the user equipment or receiving the data from the user equipment by using the radio resource configuration of the first connection; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Based on the third aspect, in a first possible implementation manner, that the communication node to which the target cell belongs acquires the first information includes:
performing, by the communication node to which the target cell belongs, measurement on an uplink reference signal of the user equipment;
sending, by the communication node to which the target cell belongs, a measurement report obtained by performing measurement on the uplink reference signal of the user equipment to the communication control node, where the measurement report includes reference signal received power or reference signal received quality of the uplink reference signal of the user equipment; and
when the communication control node determines, according to the measurement report, that the communication node to which the target cell belongs needs to send the data to the user equipment or receive the data from the user equipment, acquiring, by the communication node to which the target cell belongs, the first information indicated by the communication control node.

Based on the third aspect or the first possible implementation manner, in a second possible implementation manner of the third aspect, the method further includes:
acquiring, by the communication node to which the target cell belongs, a sequence initialization parameter that is of the target cell and that is indicated by the communication control node, and receiving the data from the user equipment or sending the data to the user equipment according to the sequence initialization parameter of the target cell; or
acquiring, by the communication node to which the target cell belongs, a cell identity that is indicated by the communication control node and that is used when the communication node to which the target cell belongs communicates with the user equipment, and receiving the data from the user equipment or sending the data to the user equipment according to the cell identity; or
acquiring, by the communication node to which the target cell belongs, a time for sending the data to the user equipment by the communication node to which the target cell belongs, or a modulation and coding scheme that is used for sending the data to the user equipment by the communication node to which the target cell belongs, where the time and the modulation and coding scheme are indicated by the communication control node, and sending the data to the user equipment at the time for sending the data or by using the modulation and coding scheme that is used for sending the data.

Based on any one of the third aspect to the second possible implementation manner of the third aspect, in a third possible implementation manner of the third aspect, the method further includes:
receiving, by the communication node to which the target cell belongs, the data sent by the communication control node, or receiving, by the communication node to which the target cell belongs, the data sent by the communication node to which the source cell belongs.

A fourth aspect of the embodiments of the present invention provides a communications device used for control, including:
a judging unit, configured to determine whether a communication node to which a target cell belongs needs to send data to user equipment or receive data from the user equipment; and
a first indicating unit, configured to: when the judging unit determines that the communication node to which the target cell belongs needs to send the data to the user equipment or receive the data from the user equipment, indicate first information to the communication node to which the target cell belongs, where the first information is used to instruct the communication node to which the target cell belongs to send the data to the user equipment or receive the data from the user equipment by using a radio resource configuration of a first connection; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Based on the fourth aspect of the embodiments of the present invention, in a first possible implementation manner of the fourth aspect, the judging unit includes:
a second indicating unit, configured to instruct the communication node to which the target cell belongs to perform measurement on an uplink reference signal of the user equipment;
a receiving unit, configured to receive a measurement report sent by the communication node to which the target cell belongs, where the measurement report includes reference signal received power or reference signal received quality of the uplink reference signal of the user equipment; and
a determining unit, configured to determine, according to the measurement report, whether the communication node to which the target cell belongs needs to send the data to the user equipment or receive the data from the user equipment.

Based on the fourth aspect or the first possible implementation manner of the fourth aspect, in a second possible implementation manner of the fourth aspect, the communications device further includes:
a third indicating unit, configured to instruct the communication node to which the source cell belongs to keep the first connection, and send the data to the user equipment or receive the data from the user equipment by using the first connection.

Based on the fourth aspect, in a third possible implementation manner of the fourth aspect, the judging unit is specifically configured to: in a case in which the communication control node learns that the user equipment has a multi-connection capability, determine whether the communication node to which the target cell belongs needs to send data to the user equipment or receive data from the user equipment; where:
the multi-connection capability is used to indicate that the user equipment has a capability of being scheduled by at least two communication nodes; or the multi-connection capability is used to indicate that the user equipment has a capability of establishing a control plane connection or a user plane connection with each of the at least two communication nodes; or the multi-connection capability is used to indicate that the user equipment has a capability of establishing peer-to-peer Medium Access Control MAC protocol entities with the at least two communication nodes; or the multi-connection capability is used to indicate that a MAC protocol entity of each of the at least two communication nodes has a capability of processing data of the user equipment.

Based on any one of the fourth aspect to the second possible implementation manner of the fourth aspect, in a third possible implementation manner, the communications device further includes:
a fourth indicating unit, configured to indicate a sequence initialization parameter of the target cell to the communication node to which the target cell belongs, where the sequence initialization parameter of the target cell is used by the communication node to which the target cell belongs to receive the data from the user equipment or send the data to the user equipment; or the fourth indicating unit, configured to indicate, to the communication node to which the target cell belongs, a cell identity that is used when the communication node to which the target cell belongs communicates with the user equipment, where the cell identity is used by the communication node to which the target cell belongs to receive data from the user equipment or send data to the user equipment according to the cell identity.

Based on the fourth aspect to the third possible implementation manner of the fourth aspect, in a fourth possible implementation manner of the fourth aspect, the communications device further includes:
a fifth indicating unit, configured to indicate the sequence initialization parameter of the target cell to the user equipment, where the sequence initialization parameter of the target cell is used by the user equipment to receive the data from the communication node to which the target cell belongs or send the data to the communication node to which the target cell belongs; or the fifth indicating unit, configured to instruct the user equipment to keep a PDCP entity, an RLC entity, or a MAC entity of the first connection, where the PDCP entity, the RLC entity, or the MAC entity of the first connection is used by the user equipment to receive the data from the communication node to which the target cell belongs or send the data to the communication node to which the target cell belongs; or the fifth indicating unit, configured to indicate a cell identity of the target cell to the user equipment, where the cell identity of the target cell is used by the user equipment to receive the data from the communication node to which the target cell belongs or send the data to the communication node to which the target cell belongs.

Based on any one of the fourth aspect to the fourth possible implementation manner of the fourth aspect, in a fifth possible implementation manner, the communications device further includes:
a sixth indicating unit, configured to indicate, to the communication node to which the target cell belongs, a time for sending the data to the user equipment by the communication node to which the target cell belongs, or a modulation and coding scheme that is used for sending the data to the user equipment by the communication node to which the target cell belongs, so that the communication node to which the target cell belongs sends the data to the user equipment or receives the data from the user equipment at the time for sending the data or by using the modulation and coding scheme that is used for sending the data.

Based on the fourth aspect to the fifth possible implementation manner of the fourth aspect, in a sixth possible implementation manner of the fourth aspect, the communications device further includes:
a sending unit, configured to send the data to the communication node to which the source cell belongs, the communication node to which the target cell belongs, or the user equipment.

A fifth aspect of the embodiments of the present invention provides user equipment, including:
an acquiring unit, configured to acquire a radio resource configuration of a first connection; and
a transceiver unit, configured to: by using the radio resource configuration of the first connection, receive the data from a communication node to which a target cell belongs or send the data to the communication node to which the target cell belongs; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Based on the fifth aspect, in a first possible implementation manner of the fifth aspect, the transceiver unit is further configured to: in a case in which the user equipment has a multi-connection capability, by using the first connection, receive the data from the communication node to which the source cell belongs or send the data to the communication node to which the source cell belongs; where:
the multi-connection capability is used to indicate that the user equipment has a capability of being scheduled by at least two communication nodes; or the multi-connection capability is used to indicate that the user equipment has a capability of establishing a control plane connection or a user plane connection with each of the at least two communication nodes; or the multi-connection capability is used to indicate that the user equipment has a capability of establishing peer-to-peer Medium Access Control MAC protocol entities with the at least two communication nodes; or the multi-connection capability is used to indicate that a MAC protocol entity of each of the at least two communication nodes has a capability of processing data of the user equipment.

Based on the fifth aspect, in a second possible implementation manner of the fifth aspect,
the transceiver unit is specifically configured to: according to a received sequence initialization parameter of the target cell and the radio resource configuration of the first connection, receive the data from the communication node to which the target cell belongs or send the data to the communication node to which the target cell belongs; or
the transceiver unit is specifically configured to: by using a PDCP entity, an RLC entity, or a MAC entity of the first connection and by using the radio resource configuration of the first connection, receive the data from the communication node to which the target cell belongs or send the data to the communication node to which the target cell belongs; or
the transceiver unit is specifically configured to: according to a received cell identity of the target cell and the radio resource configuration of the first connection, receive the data from the communication node to which the target cell belongs or send the data to the communication node to which the target cell belongs.

A sixth aspect of the embodiments of the present invention provides a communication node device, where the device includes:
an acquiring unit, configured to acquire first information, where the first information is used to instruct the communication node device to send data to user equipment or receive data from the user equipment by using a radio resource configuration of a first connection, and the data includes control plane signaling data of the user equipment or user plane service data of the user equipment; and
a transceiver unit, configured to send the data to the user equipment or receive the data from the user equipment by using the radio resource configuration of the first connection; where:
   the data includes the control plane signaling data of the user equipment or the user plane service data of the user equipment, the first connection is a radio communication link that is used to carry the data and is established by the user equipment and a communication node to which a source cell belongs, a cell of the communication node is a target cell to which the user equipment moves, and the target cell and the source cell are neighboring cells.

Based on the sixth aspect, in a first possible implementation manner of the sixth aspect, the acquiring unit is specifically configured to: perform measurement on an uplink reference signal of the user equipment; send a measurement report obtained by performing measurement on the uplink reference signal of the user equipment to the communication control node, where the measurement report includes reference signal received power or reference signal received quality of the uplink reference signal of the user equipment; and when the communication control node determines, according to the measurement report, that the communication node device needs to send the data to the user equipment or receive the data from the user equipment, acquire the first information indicated by the communication control node.

Based on the sixth aspect, in a second possible implementation manner of the sixth aspect,
the acquiring unit is further configured to acquire a sequence initialization parameter that is of the target cell and that is indicated by the communication control node, and the transceiver unit is specifically configured to receive the data from the user equipment or send the data to the user equipment according to the sequence initialization parameter of the target cell; or
the acquiring unit is further configured to acquire a cell identity that is indicated by the communication control node and that is used when the communication node to which the target cell belongs communicates with the user equipment, and the transceiver unit is specifically configured to receive the data from the user equipment or send the data to the user equipment according to the cell identity; or
the acquiring unit is further configured to acquire a time for sending the data to the user equipment by the communication node to which the target cell belongs, or a modulation and coding scheme that is used for sending the data to the user equipment by the communication node to which the target cell belongs, where the time and the modulation and coding scheme are indicated by the communication control node, and the transceiver unit is specifically configured to send the data to the user equipment at the time for sending the data or by using the modulation and coding scheme that is used for sending the data.

Based on the sixth aspect, in a third possible implementation manner of the sixth aspect,
the transceiver unit is further configured to receive the data sent by the communication control node or receive the data sent by the communication node to which the source cell belongs.

According to the technical solutions provided in the embodiments of the present invention, when user equipment moves to a target cell, the user equipment and a communication node to which the target cell belongs perform communication by using a radio resource configuration of a first connection of the user equipment to a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved.

### BRIEF DESCRIPTION OF DRAWINGS

FIG. 1 is a schematic diagram of a system architecture of a data transmission method in a heterogeneous network;
FIG. 2 is a schematic flowchart of a data transmission method according to one aspect of embodiments of the present invention;
FIG. 3A is a schematic diagram of a system architecture of a data transmission method according to one aspect of the embodiments of the present invention;
FIG. 3B is a schematic flowchart of a data transmission method according to one aspect of the embodiments of the present invention;
FIG. 4A is a schematic diagram of a system architecture of a data transmission method according to one aspect of the embodiments of the present invention;
FIG. 4B is a schematic flowchart of a data transmission method according to one aspect of the embodiments of the present invention;
FIG. 5A is a schematic diagram of a system architecture of a data transmission method according to one aspect of the embodiments of the present invention;
FIG. 5B is a schematic flowchart of a data transmission method according to one aspect of the embodiments of the present invention;
FIG. 6A is a schematic diagram of a system architecture of a data transmission method according to one aspect of the embodiments of the present invention;
FIG. 6B is a schematic flowchart of a data transmission method according to one aspect of the embodiments of the present invention;
FIG. 7 is a schematic structural diagram of a communications device used for control according to one aspect of the embodiments of the present invention;
FIG. 8 is a schematic structural diagram of user equipment according to one aspect of the embodiments of the present invention;
FIG. 9 is a schematic structural diagram of a communication node device according to another aspect of the embodiments of the present invention; and
FIG. 10 is a schematic structural diagram of a communications system according to another aspect of the embodiments of the present invention.

### DESCRIPTION OF EMBODIMENTS

The following clearly and completely describes the technical solutions in the embodiments of the present invention with reference to the accompanying drawings in the embodiments of the present invention. Apparently, the specific embodiments described below are merely a part of the embodiments of the present invention. For a person skilled in the art, the present invention may also be implemented by other embodiments that are not limited to these specific details.

The technical solutions of the embodiments of the present invention may be applied to various communications systems, such as: a Global System for Mobile Communications (Global System of Mobile communication, GSM for short) system, a Code Division Multiple Access (Code Division Multiple Access, CDMA for short) system, a Wideband Code Division Multiple Access (Wideband Code Division Multiple Access, WCDMA for short) system, a general packet radio service (General Packet Radio Service, GPRS for short) system, a Long Term Evolution (Long Term Evolution, LTE for short) system, an LTE frequency division duplex (Frequency Division Duplex, FDD for short) system, an LTE time division duplex (Time Division Duplex, TDD for short) system, a Universal Mobile Telecommunications System (Universal Mobile Telecommunication System, UMTS for short), a Wireless Fidelity (Wireless Fidelity, WIFI for short) and mobile data access system, and an Internet Protocol (Internet Protocol, IP for short) access system.

In the embodiments of the present invention, the user equipment may also be referred to as a mobile terminal (Mobile Terminal), mobile user equipment, and the like, and may communicate with one or more core networks by using a radio access network (for example, radio access network (Radio Access Network, RAN for short)). The user equipment may be a mobile terminal, such as a mobile phone (also referred to as a "cellular" phone) or a computer with a mobile terminal. For example, the user equipment may be a portable, pocket-sized, handheld, computer built-in, or in-vehicle mobile apparatus, which exchanges voice or data with the radio access network.

It should further be understood that, in the embodiments of the present invention, a communication control node may be a base transceiver station (Base Transceiver Station, BTS for short) in GSM or CDMA, may be a radio network controller (Radio Network Controller, RNC) or a NodeB (NodeB, NB for short) in WCDMA, may be an evolved NodeB (Evolutional Node B, eNB or eNodeB for short) in LTE, or may be specifically a macro eNodeB (Macro eNB) or a pico eNodeB (Pico eNB) or a radio communication node that has a scheduling function in LTE, which is not limited in the embodiments of the present invention.

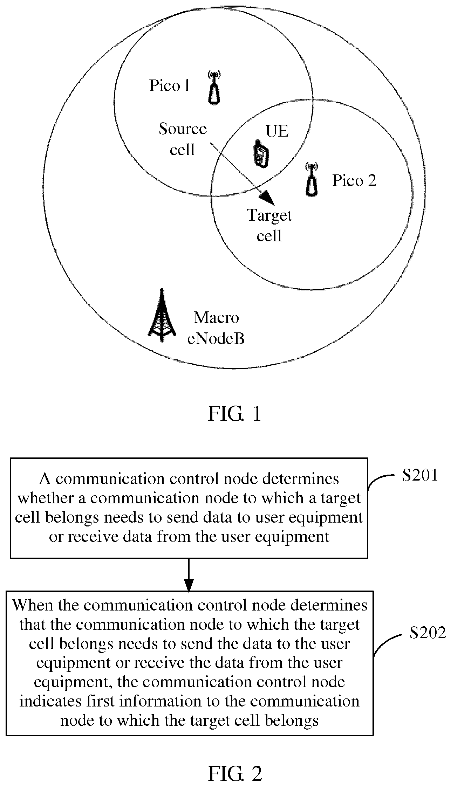

FIG. 1 is a system architecture diagram of a data transmission method in a heterogeneous network. In the method, in coverage of a macro eNodeB (Macro eNB), a first micro eNodeB (denoted by a Pico1) and a second micro eNodeB (denoted by a Pico2) are deployed in a coverage hole area or an area with heavy service load. The macro eNodeB establishes a Radio Resource Control (Radio Resource Control, RRC for short) connection with user equipment. The macro eNodeB separately establishes a control plane connection or an application layer protocol connection to the Pico1 and the Pico2. A cell of the Pico1 and a cell of the Pico2 are neighboring cells. The cell of the Pico I is a source cell in which the user equipment is located, and the user equipment performs interaction in the cell of the Pico1 by using a connection that is established with the Pico1 and that is used to carry control plane signaling data or user plane service data. When the user equipment moves from the Pico1 to the Pico2, if a handover condition is met, the user equipment is handed over to the cell of the Pico2, performs interaction by using a connection that is re-established with the Pico2 and that is used to carry signaling data or service data, and releases a control plane connection or a data plane connection that is established with the cell of the Pico1. However, in the data transmission method in the heterogeneous network shown in FIG. 1, in a process in which the user equipment re-establishes the connection that is used to carry signaling data or service data with the Pico2, a physical layer, a MAC layer, an RLC layer, and a PDCP layer of the user equipment are re-established, which causes interrupt latency of the user equipment and affects user experience.

FIG. 2 is a schematic flowchart of a data transmission method according to one aspect of the embodiments of the present invention, where the method includes the following content:
S201. A communication control node determines whether a communication node to which a target cell belongs needs to send data to user equipment or receive data from the user equipment, where the data includes control plane signaling data of the user equipment or user plane service data of the user equipment.

Optionally, that a communication control node determines whether a communication node to which a target cell belongs needs to send data to user equipment or receive data from the user equipment in S201 includes:
S201-1. The communication control node instructs the communication node to which the target cell belongs to perform measurement on an uplink reference signal of the user equipment. Optionally, the uplink reference signal may be a sounding reference signal (Sounding Reference Signal, SRS) or a demodulation reference signal DMRS sent by the user equipment.
S201-2. The communication control node receives a measurement report obtained by performing measurement on the uplink reference signal of the user equipment by the communication node to which the target cell belongs, where the measurement report includes reference received power or reference signal received quality of the uplink reference signal of the user equipment.
S201-3. The communication control node determines, according to the measurement report, whether the communication node to which the target cell belongs needs to send the foregoing data to the user equipment or receive the foregoing data from the user equipment.

For example, the communication control node may determine whether the reference signal received power of the uplink reference signal or the reference signal received quality of the uplink reference signal in the measurement report meets a set condition, and if the set condition is met, the communication control node determines that the target cell needs to send the foregoing data to the user equipment or receive the foregoing data from the user equipment. The set condition may be set according to a requirement of coherent demodulation. If the uplink reference signal is a DMRS, the set condition may also be set according to a requirement of time offset estimation, frequency offset estimation, or the like. If the uplink reference signal is an SRS, the set condition may also be set according to a channel quality sounding requirement, a power control requirement, or the like.

Optionally, that a communication control node determines whether a communication node to which a target cell belongs needs to send data to user equipment or receive data from the user equipment includes:
determining, by the communication control node according to position information of the user equipment, or a result obtained by performing measurement on a reference signal of the target cell by the user equipment and a result obtained by performing measurement on a reference signal of the source cell by the user equipment, whether the communication node to which the target cell belongs needs to send data to the UE or receive data from the UE. The reference signal measurement result of the target cell may include reference signal received power (Reference Signal Receiving Power, RSRP for short) or reference signal received quality (Reference Signal Receiving Quality, RSRQ for short) of the target cell, and the reference signal measurement result of the source cell may include reference signal received power or reference signal received quality of the source cell.

In a possible implementation manner, the communication control node receives the position information determined by the UE by using a satellite positioning system (for example, the Global Positioning System of the United States of America or the BeiDou Navigation Satellite System of China), and the communication control node may determine, according to the position information of the UE, whether the UE already moves to the target cell or moves to a set position area in the target cell, and if yes, determines that the communication node to which the target cell belongs may establish data transmission with the UE, and may provide a data transmission service for the UE or offload UE data of the source cell.

In another possible implementation manner, after moving to the target cell, the UE separately performs measurement on the reference signal of the target cell and the reference signal of the source cell, and sends the obtained reference signal measurement result of the target cell and the obtained reference signal measurement result of the source cell to the communication control node. If determining that the reference signal measurement result of the target cell is greater than the reference signal measurement result of the source cell, the communication control node determines that the communication node to which the target cell belongs may send data to the UE or receive data from the UE, and instructs the communication node to which the target cell belongs to send data to the UE or receive data from the UE.

S202. When the communication control node determines that the communication node to which the target cell belongs needs to send the data to the user equipment or receive the data from the user equipment, the communication control node indicates first information to the communication node to which the target cell belongs, where the first information is used to instruct the communication node to which the target cell belongs to send the data to the user equipment or receive the data from the user equipment by using a radio resource configuration of a first connection.

Optionally, the communication control node and the communication node to which the target cell belongs may be a same communication node, and that the communication control node indicates first information to the communication node to which the target cell belongs is that the communication control node acquires the first information and instructs, according to the first information, the communication control node to send data to the user equipment or receive data from the user equipment by using the radio resource configuration of the first connection.

Optionally, that a communication control node determines whether a communication node to which a target cell belongs needs to send data to user equipment or receive data from the user equipment includes: in a case in which the communication control node learns that the user equipment has a multi-connection capability, determining, by the communication control node, whether the communication node to which the target cell belongs needs to send data to the user equipment or receive data from the user equipment, where the multi-connection capability is used to indicate that the user equipment has a capability of being scheduled by at least two communication nodes; or the multi-connection capability is used to indicate that the user equipment has a capability of establishing a control plane connection or a user plane connection with each of the at least two communication nodes; or the multi-connection capability is used to indicate that the user equipment has a capability of establishing peer-to-peer Medium Access Control MAC protocol entities with the at least two communication nodes; or the multi-connection capability is used to indicate that a MAC protocol entity of each of the at least two communication nodes has a capability of processing data of the user equipment. For example, the multi-connection capability is used to indicate that the user equipment can send data to both the communication node to which the target cell belongs and a communication node to which the source cell belongs, receive data from both the communication node to which the target cell belongs and the communication node to which the source cell belongs, receive data from the communication node to which the target cell belongs and send data to the communication node to which the source cell belongs, or send data to the communication node to which the target cell belongs and receive data from the communication node to which the source cell belongs; or the multi-connection capability is used to indicate that the user equipment can establish peer-to-peer MAC protocol entities with the communication node to which the target cell belongs and the communication node to which the source cell belongs. In the method shown in FIG. 1, the user equipment moves from the source cell to the target cell and establishes a connection that is used to carry data and is used in the target cell, and the user equipment may disconnect a connection that is used to carry data and that is used in the source cell, so as to release a communication resource. However, in this embodiment of the present invention, the communication control node instructs the communication node to which the source cell belongs to keep the first connection and send data to a user or receive data from the user equipment by using the first connection, so that the user equipment can receive data from the communication node to which the target cell belongs or send data to the communication node to which the target cell belongs, and can further receive data from the communication node to which the source cell belongs or send data to the communication node to which the source cell belongs. Therefore, both the source cell and the target cell may serve the user equipment, thereby improving a network throughput and improving the experience of the user equipment.

Optionally, the radio resource configuration of the first connection includes at least one of the following: a configuration of an RRC layer, a configuration of a PDCP layer, a configuration of an RLC layer, a configuration of a MAC layer, or a configuration of a physical layer.

Optionally, the radio resource configuration of the first connection includes at least one of the following: a configuration of an enhanced physical downlink control channel E-PDCCH, a configuration of a demodulation reference signal DMRS, a configuration of a channel state indicator-reference signal CSI-RS, a configuration of a scheduling request SR, and a configuration of a channel quality indicator CQI report.

In a possible implementation manner, before S202, the foregoing method may further include that the communication control node may receive or configure the first information. For example, the communication control node may receive first information delivered by a core network device or a network management system, or the communication control node may pre-configure the first information.

Optionally, the foregoing method may further include: S204. The communication control node indicates a sequence initialization parameter of the target cell to the user equipment, where the sequence initialization parameter of the target cell is used by the user equipment to receive data from the communication node to which the target cell belongs or send data to the communication node to which the target cell belongs; or the communication control node instructs the user equipment to keep a PDCP entity, an RLC entity, or a MAC entity of the first connection, where the PDCP entity, the RLC entity, or the MAC entity of the first connection is used by the user equipment to receive data from the communication node to which the target cell belongs or send data to the communication node to which the target cell belongs; or the communication control node indicates a cell identity of the target cell to the user equipment, where the cell identity of the target cell is used by the user equipment to receive data from the communication node to which the target cell belongs or send data to the communication node to which the target cell belongs. Optionally, the cell identity of the target cell may be a physical cell identity (Physical Cell Identity, PCI).

Optionally, the sequence initialization parameter of the target cell includes at least one of the following:
a sequence initialization parameter of a demodulation reference signal DMRS, a sequence initialization parameter of a channel state indicator-reference signal CSI-RS, a sequence initialization parameter of a sounding reference signal SRS, a sequence initialization parameter of an enhanced physical downlink control channel E-PDCCH, a sequence initialization parameter of a physical uplink shared channel PUSCH, a sequence initialization parameter of a physical downlink shared channel PDSCH, or a sequence initialization parameter of a physical uplink control channel PUCCH.

Optionally, the foregoing method may further include: S205. The communication control node indicates, to the communication node to which the target cell belongs, a time for sending data to the user equipment by the communication node to which the target cell belongs, or a modulation and coding scheme that is used for sending the data to the user equipment by the communication node to which the target cell belongs, so that the communication node to which the target cell belongs sends data to the user equipment or receives data from the user equipment at the time for sending the data or by using the modulation and coding scheme that is used for sending the data.

Optionally, the foregoing method further includes: S206. The communication control node sends data to the communication node to which the source cell belongs, the communication node to which the target cell belongs, or the user equipment.

The communication node to which the source cell belongs, the communication node to which the target cell belongs, or the user equipment may perform data transmission by using the communication control node. The communication node to which the source cell belongs or the communication node to which the target cell belongs may also perform data transmission by using a core network and by using an application layer protocol that is set along with the core network.

Optionally, in this embodiment of the present invention, the configuration of the PDCP layer may include a packet loss timer, a security parameter of the PDCP layer, or the size of a sequence number of the PDCP layer. The configuration of the RLC layer may include an RLC mode, a reordering timer, a maximum quantity of retransmission times, a sequence number field length, a quantity of poll packet data units, a quantity of poll packet data unit bytes, a status report timer, or the like. The configuration of the MAC layer may include a maximum quantity of HARQ transmission times, a periodic buffer status report timer, a retransmission buffer status report timer, information used for indicating whether bundling is performed, a discontinuous reception configuration, a timing advance timer, a power headroom report configuration, a scheduling request timer, or the like.

Optionally, in this embodiment of the present invention, the configuration of the physical layer may include a dedicated configuration of a physical uplink data channel, a dedicated configuration of a physical downlink data channel, a dedicated configuration of uplink power control, a public configuration of an uplink power control supply, a configuration of an uplink sounding reference signal, a configuration of a scheduling request, a configuration of a channel quality indicator report, a configuration of a channel state indicator report, or the like.

Optionally, in this embodiment of the present invention, the communication control node and the communication node to which the source cell belongs may be a same communication node, and the communication control node and the communication node to which the target cell belongs are different communication nodes; or the communication control node and the communication node to which the source cell belongs are different communication nodes, the communication control node and the communication node to which the target cell belongs are different communication nodes, and the communication node to which the source cell belongs and the communication node to which the target cell belongs are different communication nodes; or the communication control node, the communication node to which the source cell belongs, and the communication node to which the target cell belongs are a same communication node; or the communication control node and the communication node to which the source cell belongs are different communication nodes, and the communication node to which the source cell belongs and the communication node to which the target cell belongs are a same communication node; or the communication control node and the communication node to which the target cell belongs are a same communication node, and the communication control node and the communication node to which the source cell belongs are different communication nodes.

In this embodiment of the present invention, the data includes control plane signaling data or user plane service data.

In this embodiment of the present invention, the communication node to which the target cell belongs may establish, according to the first information and by using the radio resource configuration of the first connection, data transmission (including receiving data from the UE or sending data to the UE) between the communication node to which the target cell belongs and the UE. Optionally, the communication control node may indicate, according to cell load statuses of the source cell and the target cell or a type of user plane service data (for example, a voice service or a video service) and by using physical layer signaling, upper layer signaling (for example, application protocol signaling, RRC signaling, and MAC layer signaling between base stations) or customized signaling in a control plane connection, user plane service data to be received or sent by the communication node to which the source cell or the target cell belongs (or user plane data whose receiving or sending is to be stopped), and a proportion of the user plane service data to be received or sent (or the user plane service data whose receiving or sending is to be stopped).

Still further, when a cell identity of the source cell and a cell identity (for example, a PCI) of the target cell are different, the foregoing method may further include that the communication control node may send the cell identity of the target cell to the UE, and the UE may send data to the communication node to which the target cell belongs or receive data from the communication node to which the target cell belongs by using the cell identity of the target cell. If the cell identities of the source cell and the target cell are the same, the UE may send, by directly using the cell identity that is of the source cell and is used when communicating with the source cell, data to the communication control node or receive data from the communication control node, so that the UE still uses the cell identity of the source cell to perform data transmission without perceiving that data transmission is already switched from the source cell to the target cell, which does not affect user experience of the UE in this data transmission process.

Optionally, when the target cell and the source cell have different PCIs, the foregoing method may further include: indicating, by the communication control node, a PCI of the target cell to the UE, so that the UE can receive or send data according to the PCI of the target cell. For example, when the UE moves from the source cell to the target cell, the UE still uses a PCI of the source cell to perform scrambling code sequence initialization on data. If the UE is required to receive data from the target cell or send data to the target cell, the communication control node needs to indicate the PCI of the target cell to the UE, so as to instruct the UE to perform scrambling code sequence initialization on data. In this way, the UE can receive data from the target cell or send data to the target cell.

In an implementation manner, the communication control node may also indicate an access frequency or an access standard corresponding to the PCI of the target cell to the UE, and the user equipment may acquire the PCI of the target cell according to the access frequency or the access standard corresponding to the PCI of the target cell. In an implementation manner, the foregoing method may further include: instructing, by the communication control node, the UE to receive, according to the PCI of the source cell, feedback information about whether data is received by the communication control node, so that the UE can learn whether the data or a data packet is correctly received by the communication control node, and determine whether the data or the data packet needs to be resent. Alternatively, the communication control node may instruct the UE to feed back, according to the PCI of the source cell, whether data is received, so that the communication control node can learn whether the data or a data packet is correctly received by the UE, and determine whether the data or the data packet needs to be resent.

Optionally, when the target cell and the source cell have different PCIs, the foregoing method further includes:
instructing, by the communication control node, the communication node to which the target cell belongs to change a PCI that is used when the target cell communicates with the UE into a PCI that is the same as the PCI of the source cell, so that the UE sends or receives data according to the PCI of the source cell.

Optionally, the foregoing method further includes:
sending, by the communication control node, address information to the communication node to which the target cell belongs, where the address information is used by the communication node to which the target cell belongs to receive data from the communication control node, the communication node to which the source cell belongs, or the user equipment.

Optionally, the foregoing method further includes: before the communication control node determines whether the communication node to which the target cell belongs needs to send data to the user equipment or receive data from the user equipment, the method further includes:
determining, by the communication control node, the target cell, where the target cell is a cell for which the communication control node generates or allocates a radio resource configuration.

Optionally, the method further includes:
when the communication node to which the target cell belongs sends data to the user equipment or receives data from the user equipment, keeping, by the communication control node, a control plane connection between the communication control node and the user equipment.

In a case in which UE moves from a source cell to a target cell, quality of a reference signal that is of the source cell and is measured by the UE becomes worse, and quality of a reference signal that is of the target cell and is measured by the UE becomes better; therefore, when a handover condition for handing over the UE from the source cell to the target cell is met, the UE is handed over to the target cell to obtain a better service. However, this requires the UE to re-establish a physical layer, a MAC layer, an RLC layer, and a PDCP layer, thereby causing interrupt latency of the UE and compromising user experience of the UE. However, according to the technical solution provided in this embodiment of the present invention, the user equipment and a communication node to which the target cell belongs perform communication by using a radio resource configuration of a first connection of the user equipment to the source cell, and re-establishment of the physical layer, the MAC layer, the RLC layer, and the PDCP layer is not caused by a radio resource configuration performed again by the user equipment; therefore, the user equipment can normally perform data transmission with the target cell, interrupt latency of a service is reduced, and user experience of the user equipment is improved. Still further, the UE may send data to a communication node to which the source cell belongs or receive data from the communication node to which the source cell belongs, and the UE may further send data to the communication node to which the target cell belongs or receive data from the communication node to which the target cell belongs, so that an uplink and a downlink of the UE can be separated or reused, data can be offloaded, a system resource of a cell can be effectively used, and a system throughput can be improved.

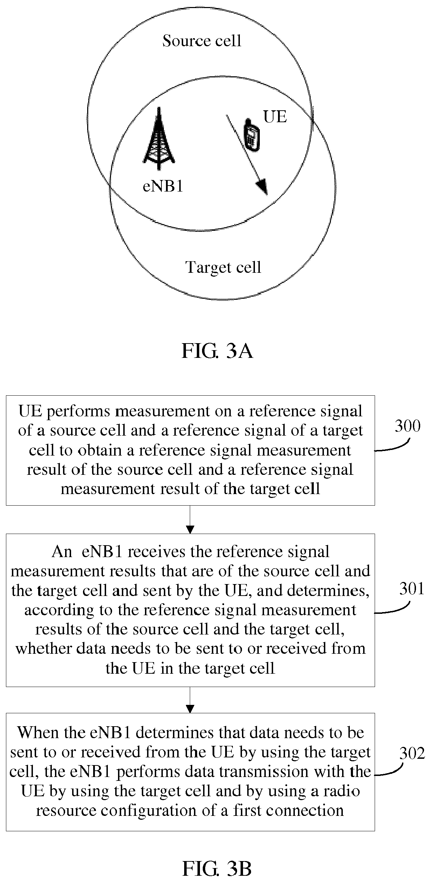

One aspect of the embodiments of the present invention provides a data transmission method. This embodiment of the present invention is a further detailed description of the method embodiment shown in FIG. 2, and a concept in the method embodiment shown in FIG. 2 is also applicable to this embodiment. In this embodiment, a communication control node is a communication node to which a target cell belongs, and the communication node to which the target cell belongs is the same as a communication node to which a source cell belongs. FIG. 3A is a schematic diagram of a system architecture of a data transmission method according to one aspect of the embodiments of the present invention. The source cell and the target cell are two neighboring cells of a same communication node eNB1. FIG. 3B is a schematic flowchart of a data transmission method according to one aspect of the embodiments of the present invention. In a process in which UE moves from the source cell to the target cell, the method includes the following content:
S300. The UE performs measurement on a reference signal of the source cell and a reference signal of the target cell to obtain a reference signal measurement result of the source cell and a reference signal measurement result of the target cell.

Optionally, the reference signal measurement result of the source cell may include reference signal received power of the source cell or reference signal received quality of the source cell, and the reference signal measurement result of the target cell may include reference signal received power of the target cell or reference signal received quality of the target cell.

Optionally, the reference signal of the source cell may include a CSI-RS or a cell-specific reference signal (Cell-specific reference signals, CRS). The reference signal of the target cell may also include a CSI-RS or a CRS of the target cell.

S301. The eNB1 receives the reference signal measurement results that are of the source cell and the target cell and are sent by the UE, and determines, according to the reference signal measurement results of the source cell and the target cell, whether data needs to be sent to or received from the UE in the target cell.

Optionally, the eNB1 compares the reference signal measurement result of the source cell with the reference signal measurement result of the target cell, and if the reference signal measurement result of the source cell is less than the reference signal measurement result of the target cell, the eNB1 determines that data transmission between the target cell and the UE may be established, that is, the eNB 1 sends data to the UE or receives data from the target cell by using the target cell.

Optionally, the eNB1 compares the reference signal measurement result of the target cell with a preset threshold, where the preset threshold may be determined according to a channel estimation requirement, a system resource, engineering experience, or an operator policy. If the reference signal measurement result of the target cell is greater than the preset threshold, the eNB1 determines that data transmission between the target cell and the UE may be established (the data transmission includes receiving, by the eNB1, data from the UE or sending data to the UE by using the target cell).

S302. When the eNB1 determines that data needs to be sent to or received from the UE by using the target cell, the eNB1 performs data transmission with the UE by using the target cell and by using a radio resource configuration of a first connection.

Because the UE moves from the source cell to the target cell of the same communication node, the communication control node may directly use first information between the UE and the source cell to receive data from the UE in the target cell or send data to the UE in the target cell. If PCIs of the source cell and the target cell are different, the eNB1 may send a PCI of the target cell to the UE. The UE may receive or send data in the target cell according to the PCI of the target cell, and the UE may also receive or send data in the source cell according to a PCI of the source cell. The data received or sent in the target cell by the UE and the data received or sent in the source cell by the UE may be the same or may be different. For example, the UE may receive or send a video data service in the target cell, and receive or send voice service data in the source cell. For another example, the UE may receive or send 80% of a video service in the target cell, and receive or send 20% of the video service in the source cell. For another example, a proportion of data transmitted between the source cell and the user equipment and a proportion of data transmitted between the target cell and the user equipment may also be the same, or may also be random. In this way, stability of data received by the user equipment may be ensured, and a problem of failing to receive data is not caused in a moving process.

According to the technical solution provided in this embodiment of the present invention, user equipment and a communication node to which a target cell belongs perform communication by using a radio resource configuration of a first connection of the user equipment to a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved. Still further, the UE may send data to a communication node to which the source cell belongs or receive data from the communication node to which the source cell belongs, and the UE may further send data to the communication node to which the target cell belongs or receive data from the communication node to which the target cell belongs, so that an uplink and a downlink of the UE can be separated or reused, data can be offloaded, a system resource of a cell can be effectively used, and a system throughput can be improved.

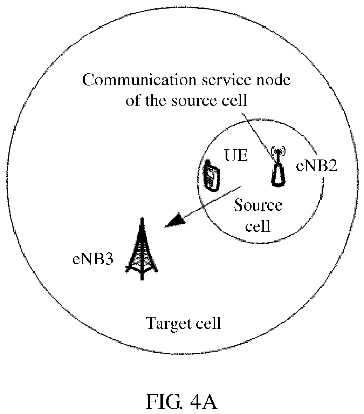

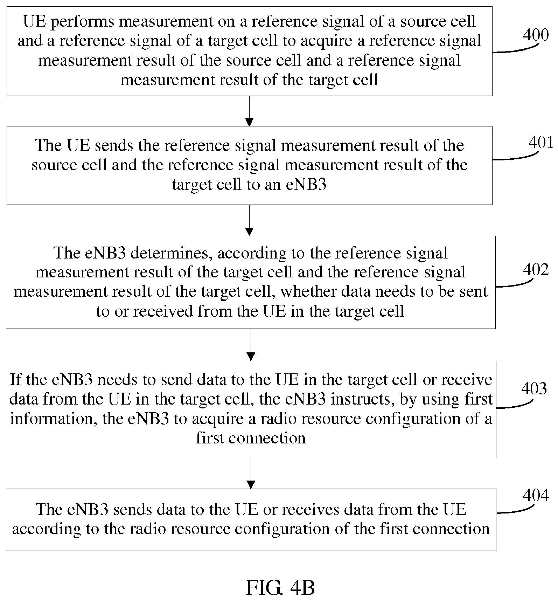

One aspect of the embodiments of the present invention provides a data transmission method. This embodiment of the present invention is a further detailed description of the method embodiment shown in FIG. 2, and a concept in the embodiment shown in FIG. 2 is also applicable to this embodiment. FIG. 4A is a schematic diagram of a system architecture of a data transmission method according to one aspect of the embodiments of the present invention. A communication control node is a communication node to which a target cell belongs, the communication node to which the target cell belongs is different from a communication node to which a source cell belongs, and the source cell and the target cell are neighboring cells of different communication service nodes, where the communication node to which the target cell belongs is denoted by an eNB3, and the communication node to which the source cell belongs is denoted by an eNB2. FIG. 4B is a schematic flowchart of a data transmission method according to one aspect of the embodiments of the present invention, where the method includes the following content:
S400. UE performs measurement on a reference signal of the source cell and a reference signal of the target cell to acquire a reference signal measurement result of the source cell and a reference signal measurement result of the target cell.

Optionally, the reference signal measurement result of the source cell includes reference signal received power of the source cell or reference signal received quality of the source cell, and the reference signal measurement result of the target cell includes reference signal received power of the target cell or reference signal received quality of the target cell.

Optionally, the reference signal of the source cell may include a CSI-RS or a CRS. The reference signal of the target cell may also include a CSI-RS or a CRS of the target cell.

S401. The UE sends the reference signal measurement result of the source cell and the reference signal measurement result of the target cell to the eNB3.

S402. The eNB3 determines, according to the reference signal measurement result of the target cell and the reference signal measurement result of the source cell, whether data needs to be sent to or received from the UE in the target cell.

Optionally, the eNB3 compares the reference signal measurement result of the source cell with the reference signal measurement result of the target cell, and if the reference signal measurement result of the source cell is less than the reference signal measurement of the target cell, the eNB3 determines that data transmission between the target cell and the UE may be established, that is, the eNB3 sends data to the UE or receives data from the target cell.

Optionally, the eNB3 compares the reference signal measurement result of the target cell with a preset threshold, where the preset threshold may be determined according to a channel estimation requirement, a system resource, engineering experience, or an operator policy. If the reference signal measurement result of the target cell is greater than the preset threshold, the eNB3 determines that data transmission between the target cell and the UE may be established.

S403. If the eNB3 needs to send data to the UE in the target cell or receive data from the UE in the target cell, the eNB3 instructs, by using first information, the eNB3 to acquire a radio resource configuration of a first connection. Optionally, the eNB3 may instruct the eNB2 to send the radio resource configuration of the first connection to the eNB3 by using a control plane connection or an application layer protocol between the eNB3 and the eNB2.

S404. The eNB3 sends data to the UE or receives data from the UE according to the radio resource configuration of the first connection.

Optionally, the eNB3 may send data to the UE or receive data from the UE according to the radio resource configuration of the first connection after receiving a message that is of the UE and is used for requesting to perform data transmission.

According to the technical solution provided in this embodiment of the present invention, when user equipment moves to a target cell, the user equipment and a communication node to which the target cell belongs perform communication by using a radio resource configuration that is of a first connection and is used when the user equipment performs data transmission in a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved.

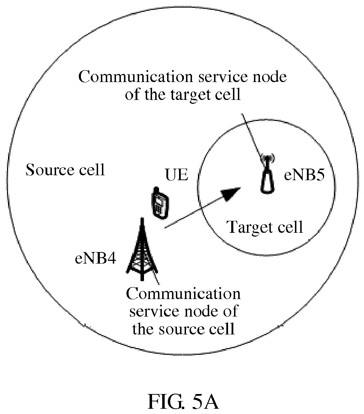

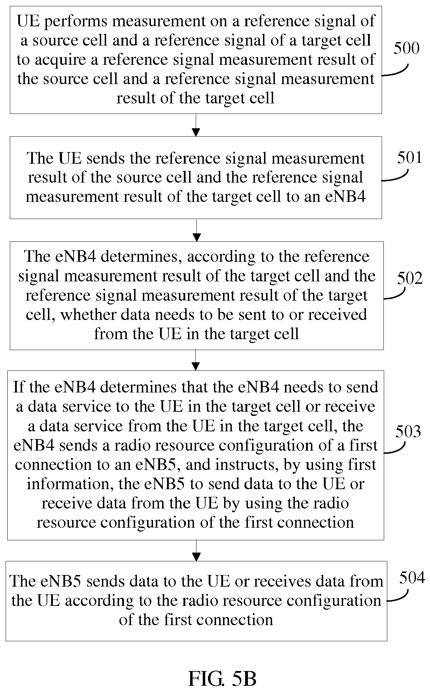

One aspect of the embodiments of the present invention provides a data transmission method. This embodiment of the present invention is a further detailed description of the method embodiment shown in FIG. 2, and a concept in the embodiment shown in FIG. 2 is also applicable to this embodiment. FIG. 5A is a schematic diagram of a system architecture of a data transmission method according to one aspect of the embodiments of the present invention. A communication control node is a communication node to which a source cell belongs, the communication node to which the source cell belongs is different from a communication node to which a target cell belongs, and the source cell and the target cell are neighboring cells of different communication service nodes, where the communication node to which the target cell belongs is denoted by an eNB5, and the communication node to which the source cell belongs is denoted by an eNB4. FIG. 5B is a schematic flowchart of a data transmission method according to one aspect of the embodiments of the present invention, where the method includes the following content:
S500. UE performs measurement on a reference signal of the source cell and a reference signal of the target cell to acquire a reference signal measurement result of the source cell and a reference signal measurement result of the target cell.

Optionally, the reference signal measurement result of the source cell includes reference signal received power of the source cell or reference signal received quality of the source cell, and the reference signal measurement result of the target cell includes reference signal received power of the target cell or reference signal received quality of the target cell.

Optionally, the reference signal of the source cell may include a CSI-RS or a CRS. The reference signal of the target cell may also include a CSI-RS or a CRS of the target cell.

S501. The UE sends the reference signal measurement result of the source cell and the reference signal measurement result of the target cell to the eNB4.

S502. The eNB4 determines, according to the reference signal measurement result of the target cell and the reference signal measurement result of the source cell, whether data needs to be sent to or received from the UE in the target cell.

Optionally, the eNB4 compares the reference signal measurement result of the source cell with the reference signal measurement result of the target cell, and if the reference signal measurement result of the source cell is less than the reference signal measurement of the target cell, the eNB4 determines that data transmission between the target cell and the UE may be established, that is, the communication node to which the target cell belongs needs to send data to the UE or receive data from the target cell.

Optionally, the eNB4 compares the reference signal measurement result of the target cell with a preset threshold, where the preset threshold may be determined according to a channel estimation requirement, a system resource, engineering experience, or an operator policy. If the reference signal measurement result of the target cell is greater than the preset threshold, the eNB5 determines that data transmission between the target cell and the UE may be established.

S503. If the eNB4 determines that the eNB4 needs to send data to the UE or receive data from the UE, the eNB4 sends a radio resource configuration of a first connection to the eNB5, and instructs, by using first information, the eNB5 to send data to the UE or receive data from the UE by using the radio resource configuration of the first connection.

S504. The eNB5 sends data to the UE or receives data from the UE according to the radio resource configuration of the first connection.

Optionally, the eNB5 may send data to the UE or receive data from the UE according to the radio resource configuration of the first connection after receiving a request of the UE for performing data transmission.

According to the technical solution provided in this embodiment of the present invention, when user equipment moves to a target cell, the user equipment and a communication node to which the target cell belongs perform communication by using a radio resource configuration that is of a first connection and is used when the user equipment performs data transmission in a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved.

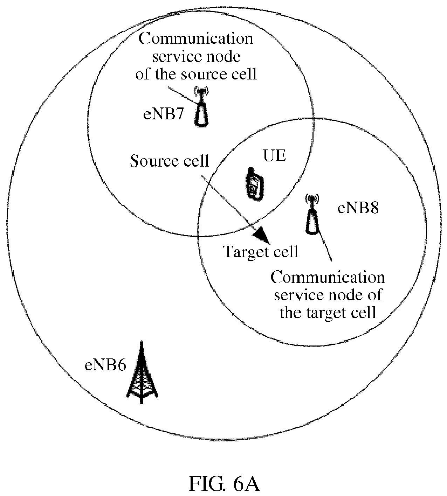

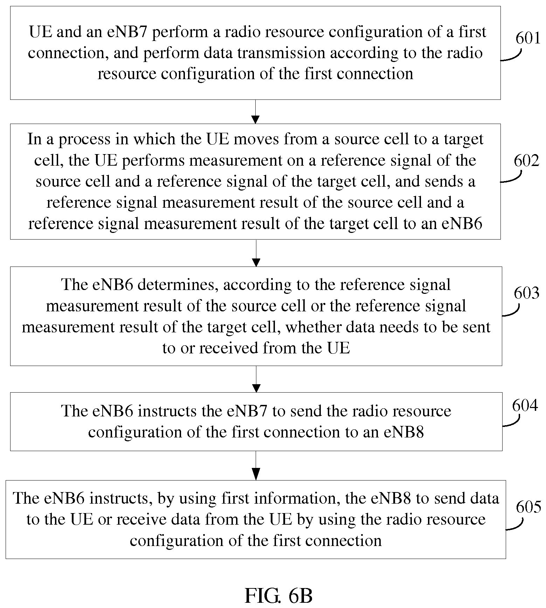

One aspect of the embodiments of the present invention provides a data transmission method. This embodiment of the present invention is a further detailed description of the method embodiment shown in FIG. 2, and a concept in the embodiment shown in FIG. 2 is also applicable to this embodiment. FIG. 6A is a schematic diagram of a system architecture of a data transmission method according to one aspect of the embodiments of the present invention. A communication control node is neither a communication node to which a target cell belongs, nor a communication node to which a source cell belongs, where the source cell and the target cell are neighboring cells of different communication service nodes. The communication control node is denoted by an eNB6, the communication node to which the source cell belongs is denoted by an eNB7, and the communication node to which the target cell belongs is denoted by an eNB8. The eNB7 and the eNB8 may be pico eNodeBs (Pico eNB), the eNB6 may be a macro eNodeB (Macro eNB), and the eNB7 and the eNB8 are deployed in a weak-coverage area of the eNB6 or an area with heavy service load within coverage of the macro eNodeB. FIG. 6B is a schematic flowchart of a data transmission method according to one aspect of the embodiments of the present invention, where the method includes the following content:
S601. UE and the eNB7 perform a radio resource configuration of a first connection, and perform data transmission (including receiving, by the UE, data from the eNB7 or sending data to the eNB7) according to the radio resource configuration of the first connection.

Optionally, the radio resource configuration of the first connection may be allocated by the eNB6, and sent by the eNB6 to the UE and the eNB7.

S602. In a process in which the UE moves from the source cell to the target cell, the UE performs measurement on a reference signal of the source cell and a reference signal of the target cell, and sends a reference signal measurement result of the source cell and a reference signal measurement result of the target cell to the eNB6.

S603. The eNB6 determines, according to the reference signal measurement result of the source cell or the reference signal measurement of the target cell, whether data needs to be sent to or received from the UE.

Optionally, if the reference signal measurement result of the target cell is greater than a preset threshold, the eNB6 may determine that the target cell needs to send data to the UE or receive data from the UE, where the preset threshold may be determined according to a channel estimation requirement, a system resource, and an operator policy. Alternatively, if the reference signal measurement result of the target cell is greater than the reference signal measurement result of the source cell, the eNB6 may determine that the target cell needs to send data to the UE or receive data from the UE.

Optionally, the eNB6 may also determine, according to position information of the UE, whether the target cell needs to send data to the UE or receive data from the UE, and does not need to determine, according to the reference signal measurement result of the source cell and the reference signal measurement result of the target cell, whether the target cell to send data to the UE or receive data from the UE.

S604. The eNB6 instructs the eNB7 to send the radio resource configuration of the first connection to the eNB8.

The eNB6 may instruct the eNB7 to directly send the radio resource configuration of the first connection to the eNB8; or the eNB6 may instruct the eNB7 to send the radio resource configuration of the first connection to the eNB6, and the eNB6 sends the radio resource configuration of the first connection to the eNB8.

Optionally, the radio resource configuration of the first connection may be configured by the eNB6, or the radio resource configuration of the first connection may be directly sent by the eNB6 to the eNB8.

S605. The eNB6 instructs, by using first information, the eNB8 to send data to the UE or receive data from the UE by using the radio resource configuration of the first connection.

The eNB6 may instruct the eNB8 only to send data to the UE on an uplink, only to receive data from the UE on a downlink, or to send data to the UE on the uplink and receive data from the UE on the downlink. The eNB6 may also indicate a type of data that is sent by the eNB8 to the UE or is received by the eNB8 from the UE. According to the type of the data, the eNB8 may send data of this type to the UE or receive data of this type from the UE.

Optionally, the eNB6 may also instruct the eNB7 to send data to the UE or receive data from the UE. The eNB6 may instruct, according to a type of data or a cell load status, the eNB7 to send data to the UE or receive data from the UE. The eNB6 may also instruct, according to a type of data or a cell load status, the eNB8 to send data to the UE or receive data from the UE. For example, the eNB7 may receive voice data from the UE, and the eNB8 may receive video data from the UE. For another example, the eNB7 may receive voice data from the UE and send video data to the UE, and the eNB8 may receive video data from the UE and send voice data to the UE. For another example, because cell load statuses may be different, if a cell load status of the eNB7 is worse, the eNB7 may send less video data to the UE, and if a cell load status of the eNB8 is better, the eNB8 may also send more video services to the UE.

Optionally, the eNB6 may also instruct the UE to receive data only from the eNB8 or send data only to the eNB8, or instruct the UE to receive data only from the eNB7 or send data only to the eNB7, or instruct the UE to receive data from both the eNB8 and the eNB7 or send data to both the eNB8 and the eNB7, or instruct the UE to receive data or data of a service data type from the eNB8 and send data or data of a service data type to the eNB7.

According to the technical solution provided in this embodiment of the present invention, when user equipment moves to a target cell, the user equipment and a communication node to which the target cell belongs perform communication by using a radio resource configuration that is of a first connection and is used when the user equipment performs data transmission in a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved.

Another aspect of the embodiments of the present invention provides a communications device used for control. The communications device may execute an action executed by the communication control node in the method embodiment shown in FIG. 1, and all concepts in the method embodiment shown in FIG. 1 are applicable to this embodiment.

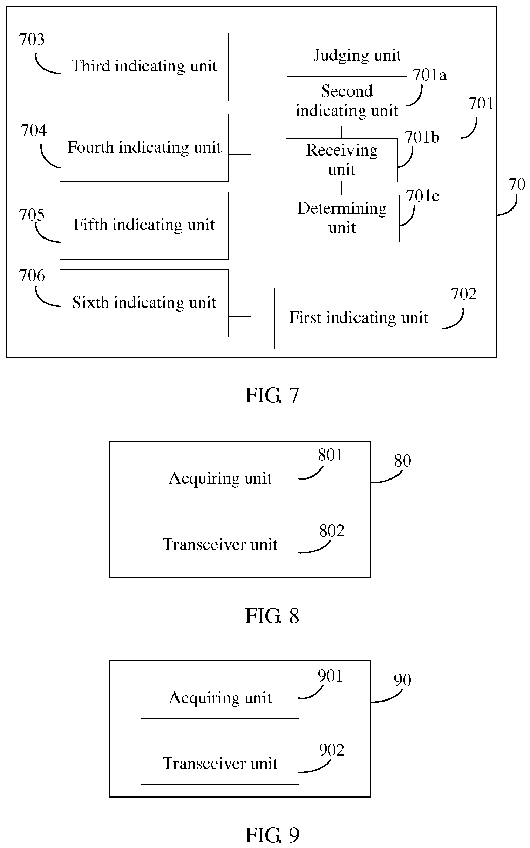

FIG. 7 is a schematic structural diagram of a communications device used for control according to one aspect of the embodiments of the present invention, and the communications device 70 includes:
a judging unit 701, configured to determine whether a communication node to which a target cell belongs needs to send data to user equipment or receive data from the user equipment; and
a first indicating unit 702, configured to: when the judging unit determines that the communication node to which the target cell belongs needs to send the data to the user equipment or receive the data from the user equipment, indicate first information to the communication node to which the target cell belongs, where the first information is used to instruct the communication node to which the target cell belongs to send the data to the user equipment or receive the data from the user equipment by using a radio resource configuration of a first connection; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Optionally, the judging unit 701 includes:
a second indicating unit 701a, configured to instruct the communication node to which the target cell belongs to perform measurement on an uplink reference signal of the user equipment;
a receiving unit 701b, configured to receive a measurement report sent by the communication node to which the target cell belongs, where the measurement report includes reference signal received power or reference signal received quality of the uplink reference signal of the user equipment; and
a determining unit 701c, configured to determine, according to the measurement report, whether the communication node to which the target cell belongs needs to send the data to the user equipment or receive the data from the user equipment.

Optionally, the foregoing communications device further includes:
a third indicating unit 703, configured to instruct the communication node to which the source cell belongs to keep the first connection, and send the data to the user equipment or receive the data from the user equipment by using the first connection.

Optionally, the foregoing communications device further includes:
a fourth indicating unit 704, configured to indicate a sequence initialization parameter of the target cell to the communication node to which the target cell belongs, where the sequence initialization parameter of the target cell is used by the communication node to which the target cell belongs to receive the data from the user equipment or send the data to the user equipment; or the fourth indicating unit 704, configured to indicate, to the communication node to which the target cell belongs, a cell identity that is used when the communication node to which the target cell belongs communicates with the user equipment, where the cell identity is used by the communication node to which the target cell belongs to receive data from the user equipment or send data to the user equipment according to the cell identity.

Optionally, the foregoing communications device further includes: a fifth indicating unit 705, configured to indicate the sequence initialization parameter of the target cell to the user equipment, where the sequence initialization parameter of the target cell is used by the user equipment to receive the data from the communication node to which the target cell belongs or send the data to the communication node to which the target cell belongs; or the fifth indicating unit 705, configured to instruct the user equipment to keep a PDCP entity, an RLC entity, or a MAC entity of the first connection, where the PDCP entity, the RLC entity, or the MAC entity of the first connection is used by the user equipment to receive the data from the communication node to which the target cell belongs or send the data to the communication node to which the target cell belongs; or the fifth indicating unit 705, configured to indicate a cell identity of the target cell to the user equipment, where the cell identity of the target cell is used by the user equipment to receive the data from the communication node to which the target cell belongs or send the data to the communication node to which the target cell belongs.

Optionally, the communications device further includes: a sixth indicating unit 706, configured to indicate, to the communication node to which the target cell belongs, a time for sending the data to the user equipment by the communication node to which the target cell belongs, or a modulation and coding scheme that is used for sending the data to the user equipment by the communication node to which the target cell belongs, so that the communication node to which the target cell belongs sends the data to the user equipment or receives the data from the user equipment at the time for sending the data or by using the modulation and coding scheme that is used for sending the data.

Optionally, the communications device further includes: a sending unit 707, configured to send the data to the communication node to which the source cell belongs, the communication node to which the target cell belongs, or the user equipment.

The communications device used for control in this embodiment includes but is not limited to: a base transceiver station (Base Transceiver Station, BTS for short) in GSM or CDMA; may be a NodeB (NodeB, NB for short) in WCDMA; may be an evolved NodeB (Evolutional Node B, eNB or eNodeB for short) in LTE; or may be specifically a macro eNodeB (Macro eNB) or a pico eNodeB (Pico eNB) in LTE.

The communications device used for control in this embodiment may be a communication control node, where the communication control node may be a communication node that is the same as the communication node to which the source cell belongs, or may be a communication node that is the same as the communication node to which the target cell belongs.

The communications device used for control in this embodiment may execute the method provided in the embodiment shown in FIG. 1. For details, reference may be made to the embodiment shown in FIG. 1, and details are not described herein again.

Units of the communications device in this embodiment may be independent hardware entities, or may be integrated to constitute a hardware entity. For example, the foregoing units may be integrated into one or more processors (such as a central processing unit, a digital signal processor, a programmable gate array, and the like).

According to the communications device provided in this embodiment of the present invention, when user equipment moves to a target cell, the user equipment and a communication node to which the target cell belongs perform communication by using a radio resource configuration that is of a first connection and is used when the user equipment performs data transmission in a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved.

One aspect of the embodiments of the present invention provides user equipment 80. The user equipment may execute a step executed by the user equipment in any method embodiment shown in FIG. 1 to FIG. 6, and a concept described in any embodiment shown in FIG. 1 to FIG. 6 is applicable to this embodiment of the present invention. FIG. 8 is a schematic structural diagram of user equipment according to one aspect of the embodiments of the present invention, and the user equipment 80 includes:
an acquiring unit 801, configured to acquire a radio resource configuration of a first connection; and
a transceiver unit 802, configured to: by using the radio resource configuration of the first connection, receive the data from a communication node to which a target cell belongs or send the data to the communication node to which the target cell belongs; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Optionally, the transceiver unit 802 is further configured to: in a case in which the user equipment has a multi-connection capability, by using the first connection, receive the data from the communication node to which the source cell belongs or send the data to the communication node to which the source cell belongs, where the multi-connection capability is used to indicate that the user equipment has a capability of being scheduled by at least two communication nodes; or the multi-connection capability is used to indicate that the user equipment has a capability of establishing a control plane connection or a user plane connection with each of the at least two communication nodes; or the multi-connection capability is used to indicate that the user equipment has a capability of establishing peer-to-peer Medium Access Control MAC protocol entities with the at least two communication nodes; or the multi-connection capability is used to indicate that a MAC protocol entity of each of the at least two communication nodes has a capability of processing data of the user equipment.

Optionally, the transceiver unit 802 is specifically configured to: according to a received sequence initialization parameter of the target cell and the radio resource configuration of the first connection, receive the data from the communication node to which the target cell belongs or send the data to the communication node to which the target cell belongs; or
the transceiver unit 802 is specifically configured to: by using a PDCP entity, an RLC entity, or a MAC entity of the first connection and by using the radio resource configuration of the first connection, receive the data from the communication node to which the target cell belongs or send the data to the communication node to which the target cell belongs; or the transceiver unit 802 is specifically configured to: according to a received cell identity of the target cell and the radio resource configuration of the first connection, receive the data from the communication node to which the target cell belongs or send the data to the communication node to which the target cell belongs.

Optionally, the transceiver unit 802 is further configured to receive instruction information of a communication control node, where the instruction information is used to instruct the user equipment to feed back, according to a PCI of the source cell, whether data is received; or the instruction information is used to instruct the user equipment to receive, according to the PCI of the source cell, feedback information about whether data is received by the communication control node.

Units of the user equipment in this embodiment may be independent hardware entities, or may be integrated to constitute a hardware entity. For example, the foregoing units may be integrated into one or more processors (such as a central processing unit, a digital signal processor, a programmable gate array, and the like).

According to the communications device provided in this embodiment of the present invention, when user equipment moves to a target cell, the user equipment and a communication node to which the target cell belongs perform communication by using a radio resource configuration that is of a first connection and is used when the user equipment performs data transmission in a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved.

FIG. 9 is a schematic structural diagram of a communication node device 90 according to another aspect of the embodiments of the present invention, and the communication node device 90 includes:
an acquiring unit 901, configured to acquire first information, where the first information is used to instruct the communication node device to send data to user equipment or receive data from the user equipment by using a radio resource configuration of a first connection, and the data includes control plane signaling data of the user equipment or user plane service data of the user equipment; and
a transceiver unit 902, configured to send the data to the user equipment or receive the data from the user equipment by using the radio resource configuration of the first connection; where:
   the data includes the control plane signaling data of the user equipment or the user plane service data of the user equipment, the first connection is a radio communication link that is used to carry the data and is established by the user equipment and a communication node to which a source cell belongs, and the target cell and the source cell are neighboring cells.

Optionally, the acquiring unit 901 is further configured to acquire a sequence initialization parameter that is of the target cell and that is indicated by the communication control node, and the transceiver unit 902 is specifically configured to receive the data from the user equipment or send the data to the user equipment according to the sequence initialization parameter of the target cell; or the acquiring unit 901 is further configured to acquire a cell identity that is indicated by the communication control node and that is used when the communication node to which the target cell belongs communicates with the user equipment, and the transceiver unit 902 is specifically configured to receive the data from the user equipment or send the data to the user equipment according to the cell identity; or the acquiring unit 901 is further configured to acquire a time for sending the data to the user equipment by the communication node to which the target cell belongs, or a modulation and coding scheme that is used for sending the data to the user equipment by the communication node to which the target cell belongs, where the time and the modulation and coding scheme are indicated by the communication control node, and the transceiver unit 902 is specifically configured to send the data to the user equipment at the time for sending the data or by using the modulation and coding scheme that is used for sending the data.

Optionally, the transceiver unit 902 is further configured to receive the data sent by the communication control node or receive the data sent by the communication node to which the source cell belongs.

According to the communication node device provided in this embodiment of the present invention, when user equipment moves to a target cell, the user equipment and a communication node to which the target cell belongs perform communication by using a radio resource configuration that is of a first connection and is used when the user equipment performs data transmission in a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved.

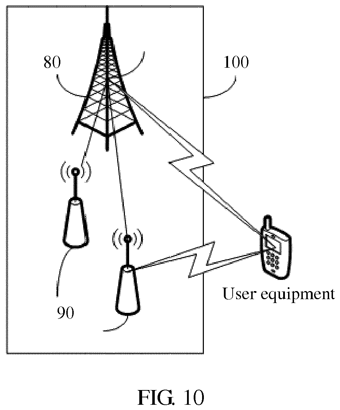

Another aspect of the embodiments of the present invention provides a communications system 100. As shown in FIG. 10, the communications system 100 includes the communications device 80 used for control in the embodiment shown in FIG. 8 and the communication node device 90 shown in FIG. 9.

According to the communications system provided in this embodiment of the present invention, when user equipment moves to a target cell, the user equipment and a communication node to which the target cell belongs perform communication by using a radio resource configuration that is of a first connection and is used when the user equipment performs data transmission in a source cell, and re-establishment of a physical layer, a MAC layer, an RLC layer, and a PDCP layer is not caused by a radio resource configuration performed again by the user equipment; therefore, the user equipment can normally perform data transmission with the target cell, interrupt latency of a service is reduced, and user experience of the user equipment is improved.

An embodiment of the present invention further provides a communications device used for control. The communications device includes a memory and a processor, where the memory is configured to store code, the processor is configured to execute the code stored in the memory, and the code is used to execute the following method:
determining, by a communication control node, whether a communication node to which a target cell belongs needs to send data to user equipment or receive data from the user equipment; and
when the communication control node determines that the communication node to which the target cell belongs needs to send the data to the user equipment or receive the data from the user equipment, indicating, by the communication control node, first information to the communication node to which the target cell belongs, where the first information is used to instruct the communication node to which the target cell belongs to send the data to the user equipment or receive the data from the user equipment by using a radio resource configuration of a first connection; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Optionally, the determining, by a communication control node, whether a communication node to which a target cell belongs needs to send data to user equipment or receive data from the user equipment includes:
instructing, by the communication control node, the communication node to which the target cell belongs to perform measurement on an uplink reference signal of the user equipment;
receiving, by the communication control node, a measurement report obtained by performing measurement on the uplink reference signal of the user equipment by the communication node to which the target cell belongs, where the measurement report includes reference signal received power or reference signal received quality of the uplink reference signal of the user equipment; and
determining, by the communication control node according to the measurement report, whether the communication node to which the target cell belongs needs to send the data to the user equipment or receive the data from the user equipment.

Optionally, the method further includes:
instructing, by the communication control node, the communication node to which the source cell belongs to keep the first connection, and send the data to the user equipment or receive the data from the user equipment by using the first connection.

Optionally, the instructing, by the communication control node, the communication node to which the source cell belongs to keep the first connection, and send the data to the user equipment or receive the data from the user equipment by using the first connection includes:
in a case in which the user equipment has a multi-connection capability, instructing, by the communication control node, the communication node to which the source cell belongs to keep the first connection, and send the data to the user equipment or receive the data from the user equipment by using the first connection; where:
the multi-connection capability is used to indicate that the user equipment has a capability of being scheduled by at least two communication nodes; or the multi-connection capability is used to indicate that the user equipment has a capability of establishing a control plane connection or a user plane connection with each of the at least two communication nodes; or the multi-connection capability is used to indicate that the user equipment has a capability of establishing peer-to-peer Medium Access Control MAC protocol entities with the at least two communication nodes; or the multi-connection capability is used to indicate that a MAC protocol entity of each of the at least two communication nodes has a capability of processing data of the user equipment.

Optionally, the radio resource configuration includes at least one of the following: a configuration of a Radio Resource Control RRC layer, a configuration of a Packet Data Convergence Protocol PDCP layer, a configuration of a Radio Link Control RLC layer, a configuration of a Medium Access Control MAC layer, or a configuration of a physical layer.

Optionally, the method further includes:
indicating, by the communication control node, a sequence initialization parameter of the target cell to the communication node to which the target cell belongs, where the sequence initialization parameter of the target cell is used by the communication node to which the target cell belongs to receive the data from the user equipment or send the data to the user equipment; or
indicating, by the communication control node to the communication node to which the target cell belongs, a cell identity that is used when the communication node to which the target cell belongs communicates with the user equipment, where the cell identity is used by the communication node to which the target cell belongs to receive data from the user equipment or send data to the user equipment according to the cell identity.

Optionally, the method further includes:
indicating, by the communication control node, the sequence initialization parameter of the target cell to the user equipment, where the sequence initialization parameter of the target cell is used by the user equipment to receive the data from the communication node to which the target cell belongs or send the data to the communication node to which the target cell belongs; or
instructing, by the communication control node, the user equipment to keep a PDCP entity, an RLC entity, or a MAC entity of the first connection, where the PDCP entity, the RLC entity, or the MAC entity of the first connection is used by the user equipment to receive the data from the communication node to which the target cell belongs or send the data to the communication node to which the target cell belongs; or
indicating, by the communication control node, a cell identity of the target cell to the user equipment, where the cell identity of the target cell is used by the user equipment to receive the data from the communication node to which the target cell belongs or send the data to the communication node to which the target cell belongs.

Optionally, the sequence initialization parameter includes at least one of the following: a sequence initialization parameter of a demodulation reference signal DMRS, a sequence initialization parameter of a channel state indicator-reference signal CSI-RS, a sequence initialization parameter of a sounding reference signal SRS, a sequence initialization parameter of an enhanced physical downlink control channel E-PDCCH, a sequence initialization parameter of a physical uplink shared channel PUSCH, a sequence initialization parameter of a physical downlink shared channel PDSCH, and a sequence initialization parameter of a physical uplink control channel PUCCH.

Optionally, the method further includes:
indicating, by the communication control node to the communication node to which the target cell belongs, a time for sending the data to the user equipment by the communication node to which the target cell belongs, or a modulation and coding scheme that is used for sending the data to the user equipment by the communication node to which the target cell belongs, so that the communication node to which the target cell belongs sends the data to the user equipment or receives the data from the user equipment at the time for sending the data or by using the modulation and coding scheme that is used for sending the data.

Optionally, the method further includes:
sending, by the communication control node, the data to the communication node to which the source cell belongs, the communication node to which the target cell belongs, or the user equipment.

The communications device provided in this embodiment of the present invention may further include a bus configured to connect the memory and the processor, a transceiver configured to transmit a signal or receive a signal, and the like.

According to the communications device in this embodiment of the present invention, when user equipment moves to a target cell, the user equipment can normally perform data transmission with the target cell without re-establishing a physical layer, a MAC layer, an RLC layer, and a PDCP layer, thereby reducing interrupt latency of a service.

One aspect of the embodiments of the present invention further provides user equipment. The user equipment includes a memory configured to store code, and a processor configured to execute the code, where the code is used to implement the following method:
acquiring, by the user equipment, a radio resource configuration of a first connection; and
receiving, by the user equipment by using the radio resource configuration of the first connection, the data from a communication node to which a target cell belongs or sending the data to the communication node to which the target cell belongs; where:
   the data includes control plane signaling data of the user equipment or user plane service data of the user equipment, the first connection is a radio communication link that is used to carry the data and is established by the user equipment and a communication node to which a source cell belongs, and the target cell and the source cell are neighboring cells.

Optionally, information about the radio resource configuration includes at least one of the following: a configuration of a Radio Resource Control RRC layer, a configuration of a Packet Data Convergence Protocol PDCP layer, a configuration of a Radio Link Control RLC layer, a configuration of a Medium Access Control MAC layer, or a configuration of a physical layer.

Optionally, the method further includes:
in a case in which the user equipment has a multi-connection capability, receiving, by the user equipment by using the first connection, the data from the communication node to which the source cell belongs or sending the data to the communication node to which the source cell belongs; where:
the multi-connection capability is used to indicate that the user equipment has a capability of being scheduled by at least two communication nodes; or the multi-connection capability is used to indicate that the user equipment has a capability of establishing a control plane connection or a user plane connection with each of the at least two communication nodes; or the multi-connection capability is used to indicate that the user equipment has a capability of establishing peer-to-peer Medium Access Control MAC protocol entities with the at least two communication nodes; or the multi-connection capability is used to indicate that a MAC protocol entity of each of the at least two communication nodes has a capability of processing data of the user equipment.

Optionally, the receiving, by the user equipment by using the radio resource configuration of the first connection, the data from a communication node to which a target cell belongs or sending the data to the communication node to which the target cell belongs includes:
receiving, by the user equipment according to a received sequence initialization parameter of the target cell and the radio resource configuration of the first connection, the data from the communication node to which the target cell belongs or sending the data to the communication node to which the target cell belongs; or
receiving, by the user equipment by using a PDCP entity, an RLC entity, or a MAC entity of the first connection and by using the radio resource configuration of the first connection, the data from the communication node to which the target cell belongs or sending the data to the communication node to which the target cell belongs; or
receiving, by the user equipment according to a received cell identity of the target cell and the radio resource configuration of the first connection, the data from the communication node to which the target cell belongs or sending the data to the communication node to which the target cell belongs.

According to the user equipment in this embodiment of the present invention, when the user equipment moves to a target cell, the user equipment can normally perform data transmission with the target cell without re-establishing a physical layer, a MAC layer, an RLC layer, and a PDCP layer, thereby reducing interrupt latency of a service.

Another aspect of the embodiments of the present invention further provides a communication node device. A cell of the communication node is a target cell to which user equipment moves, and the communication node device includes a memory configured to store code and a processor configured to execute the code, where the code is used to implement the following method:
acquiring, by a communication node to which the target cell belongs, first information from a communication control node, where the first information is used to instruct the communication node to which the target cell belongs to send data to the user equipment or receive data from the user equipment by using a radio resource configuration of a first connection, and the data includes control plane signaling data of the user equipment or user plane service data of the user equipment; and
sending, by the communication node to which the target cell belongs, the data to the user equipment or receiving the data from the user equipment by using the radio resource configuration of the first connection; where:
   the data includes the control plane signaling data of the user equipment or the user plane service data of the user equipment, the first connection is a radio communication link that is used to carry the data and is established by the user equipment and a communication node to which a source cell belongs, and the target cell and the source cell are neighboring cells.

Optionally, that the communication node to which the target cell belongs acquires the first information includes:
performing, by the communication node to which the target cell belongs, measurement on an uplink reference signal of the user equipment;
sending, by the communication node to which the target cell belongs, a measurement report obtained by performing measurement on the uplink reference signal of the user equipment to the communication control node, where the measurement report includes reference signal received power or reference signal received quality of the uplink reference signal of the user equipment; and
when the communication control node determines, according to the measurement report, that the communication node to which the target cell belongs needs to send the data to the user equipment or receive the data from the user equipment, acquiring, by the communication node to which the target cell belongs, the first information indicated by the communication control node.

Optionally, the method further includes:
acquiring, by the communication node to which the target cell belongs, a sequence initialization parameter that is of the target cell and that is indicated by the communication control node, and receiving the data from the user equipment or sending the data to the user equipment according to the sequence initialization parameter of the target cell; or
acquiring, by the communication node to which the target cell belongs, a cell identity that is indicated by the communication control node and that is used when the communication node to which the target cell belongs communicates with the user equipment, and receiving the data from the user equipment or sending the data to the user equipment according to the cell identity; or
acquiring, by the communication node to which the target cell belongs, a time for sending the data to the user equipment by the communication node to which the target cell belongs, or a modulation and coding scheme that is used for sending the data to the user equipment by the communication node to which the target cell belongs, where the time and the modulation and coding scheme are indicated by the communication control node, and sending the data to the user equipment at the time for sending the data or by using the modulation and coding scheme that is used for sending the data.

Optionally, the method further includes:
receiving, by the communication node to which the target cell belongs, the data sent by the communication control node, or receiving, by the communication node to which the target cell belongs, the data sent by the communication node to which the source cell belongs.

According to the user equipment in this embodiment of the present invention, when the user equipment moves to a target cell, the user equipment can normally perform data transmission with the target cell without re-establishing a physical layer, a MAC layer, an RLC layer, and a PDCP layer, thereby reducing interrupt latency of a service.

An embodiment of the present invention further provides a data transmission method, where the method includes:
instructing, by a communication control node, a communication node to which a target cell belongs to perform measurement on an uplink reference signal of user equipment;
receiving, by the communication control node, a measurement report obtained by performing measurement on the uplink reference signal of the user equipment by the communication node to which the target cell belongs, where the measurement report includes reference signal received power or reference signal received quality of the uplink reference signal of the user equipment;
determining, by the communication control node according to the measurement report, whether the communication node to which the target cell belongs needs to send data to the user equipment or receive data from the user equipment, where the data includes control plane signaling data of the user equipment or user plane service data of the user equipment; and
if yes, instructing, by the communication control node, the communication node to which the target cell belongs to send the data to the user equipment or receive the data from the user equipment.

An embodiment of the present invention further provides a data transmission apparatus, including:
a measurement indicating unit, configured to instruct a communication node to which a target cell belongs to perform measurement on an uplink reference signal of user equipment;
a receiving unit, configured to receive a measurement report obtained by performing measurement on the uplink reference signal of the user equipment by the communication node to which the target cell belongs, where the measurement report includes reference signal received power or reference signal received quality of the uplink reference signal of the user equipment;
a judging unit, configured to determine, according to the measurement report, whether the communication node to which the target cell belongs needs to send data to the user equipment or receive data from the user equipment, where the data includes control plane signaling data of the user equipment or user plane service data of the user equipment; and
a transmission indicating unit, configured to: when the judging unit determines that the communication node to which the target cell belongs needs to send the data to the user equipment or receive the data from the user equipment, instruct the communication node to which the target cell belongs to send the data to the user equipment or receive the data from the user equipment.

According to the technical solution provided in this embodiment of the present invention, a communication control node determines a target cell that can provide a service for user equipment by instructing a communication node to which the target cell belongs to perform measurement on an uplink reference signal, instead of by performing measurement on a downlink reference signal by user equipment, so that the user equipment does not need to measure a reference signal and report a measurement result, which may reduce resource consumption of the user equipment and improve user experience.

In some embodiments, well-known methods, interfaces, and device signaling technologies are not specifically described, so as to avoid blurring the present invention due to unnecessary details. A person of ordinary skill in the art may understand that all or some of the steps of the methods in the foregoing embodiments may be implemented by a program instructing related hardware. The program may be stored in a computer readable storage medium. The storage medium may include: a read-only memory (Read-Only Memory, ROM), a random access memory (Random Access Memory, RAM), a magnetic disk, or an optical disc.

In the foregoing specific implementation manners, the objectives, technical solutions, and beneficial effects of the present invention are further described in detail. It should be understood that the foregoing descriptions are merely specific implementation manners of the present invention, but are not intended to limit the protection scope of present invention. Any modification, equivalent replacement, or improvement made by those skilled in the art without making any creative effort shall fall within the protection scope of the present invention.

## Claims

1. A method for data transmission at user equipment, comprising:
receiving an instruction from a communication node for control, the instruction indicating to keep a packet data convergence protocol, PDCP, entity, a radio link control, RLC, entity, or a medium access control, MAC, entity of a first connection to communicate data with a communication node to which a target cell belongs;
communicating, by using the PDCP entity, the RLC entity, or the MAC entity of the first connection, the data with the communication node to which the target cell belongs;
wherein the data comprise control plane signaling data of the user equipment or user plane service data of the user equipment, the first connection is a radio communication link that is used to carry the data and is established between the user equipment and a communication node to which a source cell belongs, and the target cell and the source cell are neighboring cells.

2. The method according to claim 1, wherein the step of communicating the data with the communication node to which the target cell belongs comprising:
sending the data to the communication node to which the target cell belongs or receive the data from the communication node to which the target cell belongs.

3. The method according to claim 1 or 2, wherein the user equipment has a multi-connection capability, the method further comprises:
receiving the data from the communication node to which the source cell belongs or send the data to the communication node to which the source cell belongs;
wherein the multi-connection capability is used to indicate that the user equipment can send the data to both the communication node to which the target cell belongs and the communication node to which the source cell belongs or receive the data from both the communication node to which the target cell belongs and the communication node to which the source cell belongs; or the multi-connection capability is used to indicate that the user equipment can establish peer-to-peer MAC protocol entities with the communication node to which the target cell belongs and the communication node to which the source cell belongs.

4. The method according to any one of claim 1-3, wherein the step of the step of communicating the data with the communication node to which the target cell belongs comprises:
receiving, by the user equipment, by using the PDCP entity, the RLC entity, or the MAC entity of the first connection, and by using a radio resource configuration of the first connection, the data from the communication node to which the target cell belongs or sending the data to the communication node to which the target cell belongs.

5. The method according to claim 4, wherein the radio resource configuration comprises at least one of the following: a configuration of a RRC layer, a configuration of a PDCP layer, a configuration of a RLC layer, a configuration of a MAC, or a configuration of a physical layer.

6. The method according to any one of claims 1-5, wherein the communications device used for control is the communication node to which the source cell belongs.

7. An apparatus which is configured to perform any one of claims 1-6.

8. A method for data transmission at a communications device used for control, comprising:
determining whether a communication node to which a target cell belongs needs to communicate data with user equipment; and
instructing the user equipment to keep a packet data convergence protocol, PDCP, entity, a radio link control, RLC, entity, or a medium access control, MAC, entity of a first connection when determining that the communication node to which the target cell belongs needs to communicate the data with the user equipment, wherein the PDCP entity, the RLC entity, or the MAC entity of the first connection is used for communicating the data between the communication node to which the target cell belongs and the user equipment;
wherein the data comprise control plane signaling data of the user equipment or user plane service data of the user equipment, the first connection is a radio communication link that is used to carry the data and is established between the user equipment and a communication node to which a source cell belongs, and the target cell and the source cell are neighboring cells.

9. The method according to claim 8, wherein the wherein the communicating the data with the communication node to which the target cell belongs comprising:
sending the data to the communication node to which the target cell belongs or receive the data from the communication node to which the target cell belongs.

10. The method according to claim 8 or 9,
wherein the method further comprising:
instructing the communication node to which the target cell belongs to perform measurement on an uplink reference signal of the user equipment;
receiving a measurement report sent by the communication node to which the target cell belongs, wherein the measurement report comprises reference signal received power or reference signal received quality of the uplink reference signal of the user equipment; and
wherein the step of determining comprises:
determining, according to the measurement report, whether the communication node to which the target cell belongs needs to communicate the data with the user equipment.

11. The method according to any one of claims 8-10, the method further comprising:
sending first information to the communication node to which the target cell belongs, wherein the first information is used to instruct the communication node to which the target cell belongs to communicate the data with the user equipment by using a radio resource configuration of the first connection.

12. The method according to claim 11, wherein the radio resource configuration comprises at least one of the following: a configuration of a RRC layer, a configuration of a PDCP layer, a configuration of a RLC layer, a configuration of a MAC, or a configuration of a physical layer.

13. An apparatus which is configured to perform any one of claims 8-12.
